# EUROPÄISCHE PATENTANMELDUNG

(11) **EP 2 371 210 A2**
(43) Veröffentlichungstag der Anmeldung: **05.10.2011**
(21) Anmeldenummer: 11160620.8
(22) Anmeldetag: 31.03.2011
(51) Int. Cl.: A01K 15/02

(54) **Laufband für Pferde**

(30) Priorität: 01.04.2010 DE 102010013808
(71) Anmelder: Mitzel, Siegfried, 86655 Harburg-Grosssorheim (DE)
(72) Erfinder: Mitzel, Siegfried, 86655 Harburg-Grosssorheim (DE)
(74) Vertreter: Prietsch, Reiner

(57) **Zusammenfassung**

Ein Laufband für Pferde, bestehend aus einem Grundgestell (1), in welchem ein Rahmen (2) gelagert ist, der zwei parallele, voneinander beabstandete Längsträger (2.1) umfasst, zwischen denen ein angetriebenes, endloses Gurtband (3) läuft und der Rahmen (2) mittels Hydraulikzylindern (12) um eine zur Längsrichtung des Gurtbandes (3) rechtwinklige, erste Achse (A) zwischen einer horizontalen Stellung und einer Bergaufstellung verstellbar ist, bietet eine erweiterte Trainingsmöglichkeit dadurch, dass der Rahmen (2) in eine Bergabstellung verstellbar ist.

## Beschreibung

Die Erfindung betrifft ein Laufband für Pferde, bestehend aus einem Grundgestell, in welchem ein Rahmen gelagert ist, der zwei parallele, voneinander um mehr als die Breite des Pferdes beabstandete Längsträger umfasst, zwischen denen ein endloses Gurtband über zwei voneinander beabstandete Umlenkrollen läuft, von denen eine motorisch antreibbar ist, wobei der Rahmen mittels Hydraulikzylindern um eine zur Längsrichtung des Gurtbandes rechtwinklige, im Bereich einer der Umlenkrollen verlaufende erste Achse zwischen einer horizontalen Stellung und einer Bergaufstellung verstellbar ist.

Ein derartiges Laufband ist aus der EP-B-1 523 885 bekannt. Zur Verbesserung des Trainingseffektes kann der Rahmen dieses Laufbandes und damit dessen Gurtband kontinuierlich oder in Stufen in eine Bergaufstellung gebracht werden, in der das Pferd entgegen der festliegenden Laufrichtung des Gurtbandes, dessen Geschwindigkeit einstellbar ist, mit einer Steigung von z.B. bis zu 10% "bergauf" Schritt geht oder trabt. In der Horizontalstellung des Rahmens und damit des Gurtbandes und v.a. in der Bergaufstellung wird vorwiegend die Rückenmuskulatur und die Hinterhandmuskulatur des Pferdes trainiert. Insbesondere für in der Vielseitigkeitsreiterei eingesetzte sogenannte Geländepferde, die häufig auch längere Bergabstrecken bewältigen müssen, ist ein Training auch der Vorhandmuskulatur sinnvoll.

Aus der DE 20 2006 017 300 U1 ist ein Laufband bekannt, das mittels Spindelhubgetrieben zwischen einer Bergauf- und einer Bergabstellung verstellbar ist. Spindelhubgetriebe sind teuer und für die hohen Wechsellasten, die ein schreitendes Pferd verursacht, nur bedingt geeignet. Die Spindeln machen infolge ihrer Länge das Laufband schwingungsanfällig.

Der Erfindung liegt die Aufgabe zugrunde, ein Laufband der eingangs genannten Gattung zur Verfügung zu stellen, das die oben genannte, erweiterte Trainingsmöglichkeit für das Pferd bietet.

Diese Aufgabe ist erfindungsgemäß dadurch gelöst, dass der Rahmen in der horizontalen Stellung im Betrieb und im Stillstand des Laufbandes auf beidseitigen, von der ersten Achse beabstandeten Auflagen ruht, die zur Verstellung des Rahmens in eine Bergabstellung schwenkbar sind.

Die Auflagen haben somit eine doppelte Funktion: In der horizontalen Stellung des Laufbandes nehmen sie die Gewichtskraft des Rahmen und vor allem die um ein Mehrfaches höheren dynamischen Kräfte auf, die das Auffussen des Pferdes verursacht. Durch einfaches Wegschwenken der Auflagen wird die Verstellung in die im Vergleich zu der Bergaufstellung seltener genutzte Bergabrichtung freigegeben.

Die Auflagen können insbesondere um eine zu der ersten Achse parallele zweite Achse schwenkbar sein.

Zwar können die Auflagen grundsätzlich so ausgeführt sein, dass sie entweder von Hand oder mittels eines hydraulischen oder elektrischen Antriebes einzeln aus der Horizontalstellung in die Bergabstellung schwenkbar sind. Weil die Auflagen am besten beidseits des Rahmens angeordnet sind, ist dies bei Handbetätigung zeitaufwendig und bei motorischer Einzelbetätigung kostenaufwendig.
Vorzugsweise ist deshalb die zweite Achse als Welle ausgebildet, mit der die Auflagen drehfest verbunden sind und die an mindestens einem ihrer Enden einen Handhebel zum Schwenken der Auflagen hat.

Aus Sicherheitsgründen empfiehlt es sich, den Schwenkwinkel der Auflagen auf 90° zu begrenzen.

Alternativ zu einer Betätigung mittels Handhebel können die Auflagen motorisch und dabei vorzugsweise gemeinsam schwenkbar sein.

Am besten erfolgt die Verstellung des Rahmens und damit des Gurtbandes in die Bergabrichtung mittels der gleichen Hydraulikzylinder, die zur Verstellung in die Bergaufstellung dienen. Der Hub der Hydraulikzylinder ist dann mindestens gleich der Summe der Verstellwege in Bergabrichtung und in Bergaufrichtung.

Zweckmäßig liegt der Rahmen zur Begrenzung der maximalen Bergabstellung auf (beidseitigen) Anschlägen auf. Dann wird weder bei stehendem noch bei angetriebenem Gurtband Hilfsenergie, also z.B. Hydraulikdruck für die Hydraulikzylinder, benötigt. Das hat den Vorteil, dass auch bei einem Ausfall der für die Bewegung des Rahmens benötigten Hilfsenergie eine eigensichere Endlage auch in der Bergabstellung erreicht wird.

In einer anderen Ausführungsform kann der Rahmen in der horizontalen Stellung auf beidseitigen, von der ersten Achse beabstandeten Auflagen ruhen, die längenverstellbar, vorzugsweise hydraulisch längenverstellbar, sind.

Die negative Steigung, das heißt die Neigung des Rahmens in der Bergabstellung, kann, wie die positive Steigung oder Bergaufstellung stufenweise oder kontinuierlich einstellbar sein.

Weil die Bergabstellung im Vergleich zu der Bergaufstellung normalerweise selten benutzt wird, kann eine Anzeige, dass die Bergabstellung freigegeben ist, wünschenswert sein. Hierzu kann den Auflagen mindestens ein Stellungssensor zugeordnet sein, der mit einer Anzeige, z.B. einer Signalleuchte in einer Schalttafel verbunden ist.

In der Zeichnung ist ein Ausführungsbeispiel eines Laufbandes nach der Erfindung dargestellt. Es zeigt:
- Fig. 1:: eine Seitenansicht des Laufbandes in Horizontalstellung
- Fig. 2:: eine Seitenansicht des Laufbandes in Bergaufstellung
- Fig. 3:: eine Seitenansicht des Laufbandes in Bergabstellung
- Fig. 4:: einen Hydraulikzylinder und eine Auflage des Laufbandes in dessen Horizontalstellung in vergrößertem Maßstab und
- Fig. 5:: die gleiche Einzelheit wie Fig. 4 bei Bergabstellung des Laufbandes.

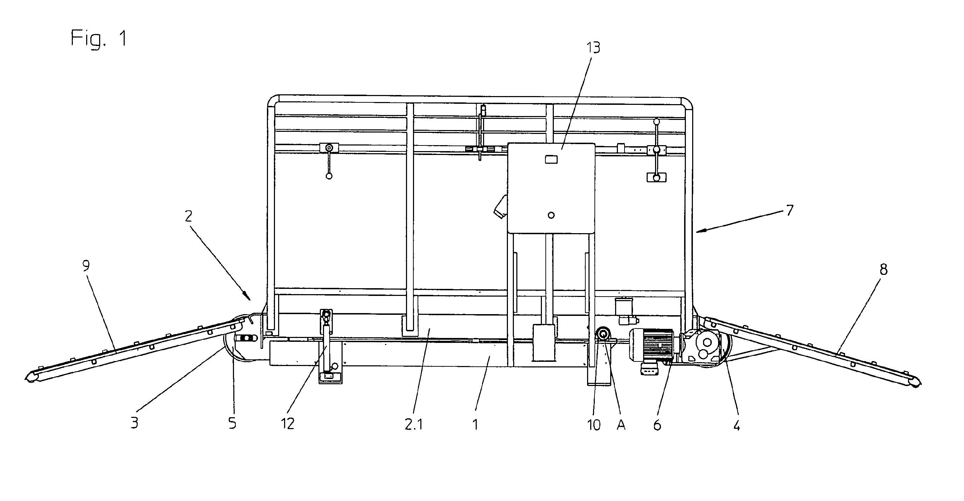

In den Figuren 1 bis 3 ist ein Laufband in einer Seitenansicht dargestellt und zwar, bezogen auf die Laufrichtung des unten genannten Gurtbandes, in einer Ansicht auf die linke Seite. Weil das Laufband mit Ausnahme von einigen Nebenaggregaten, die für das Verständnis der Erfindung unerheblich sind, symmetrisch zur Längsmittellinie des Gurtbandes ist, wird das Laufband mit folgenden nur anhand dieser Ansicht seiner linken Seite erläutert.

Das Laufband umfasst ein Grundgestell 1, in welchem ein Rahmen 2 gelagert ist, der zwei parallele, voneinander um mehr als die Breite des Pferdes beabstandete Längsträger umfasst, von denen in dieser Seitenansicht lediglich der Längsträger 2.1 zu sehen ist. Zwischen diesem Längsträger 2.1 und dem gegenüberliegenden rechtsseitigen Längsträger läuft ein endloses Gurtband 3 über zwei Umlenkrollen 4, 5, von denen die Umlenkrolle 4 über einen Elektromotor 6 und ein Getriebe angetrieben ist. An dem Längsträger 2.1 ist eine Seitenwand 7 aus einem Rohrgestell befestigt, ebenso an dem gegenüberliegenden, nicht sichtbaren Längsträger.

Das Laufband hat eine Aufgehrampe 8 und eine Abgehrampe 9. Das abgehseitige Ende des Rahmens 2 ist gegenüber dem Grundgestell 1 heb- und senkbar. Hierzu ist der Rahmen 2 über seine Längsträger mit dem Grundgestell 1 über je ein Drehlager verbunden. Das Drehlager 10 und das gegenüberliegende Drehlager auf der rechten Seite des Laufbandes befinden sich in der Nähe der Umlenkrolle 4, nämlich am aufgehseitigen Ende des Grundgestells 1. Die beiden Drehlager haben eine gemeinsame, erste Achse A, die rechtwinklig zu der Längs- und Laufrichtung des Gurtbandes 3 ist.

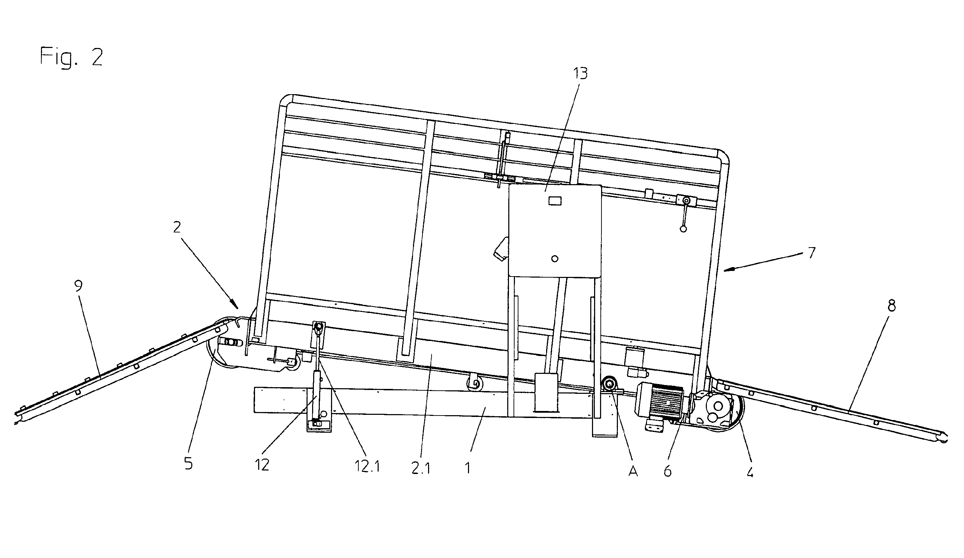

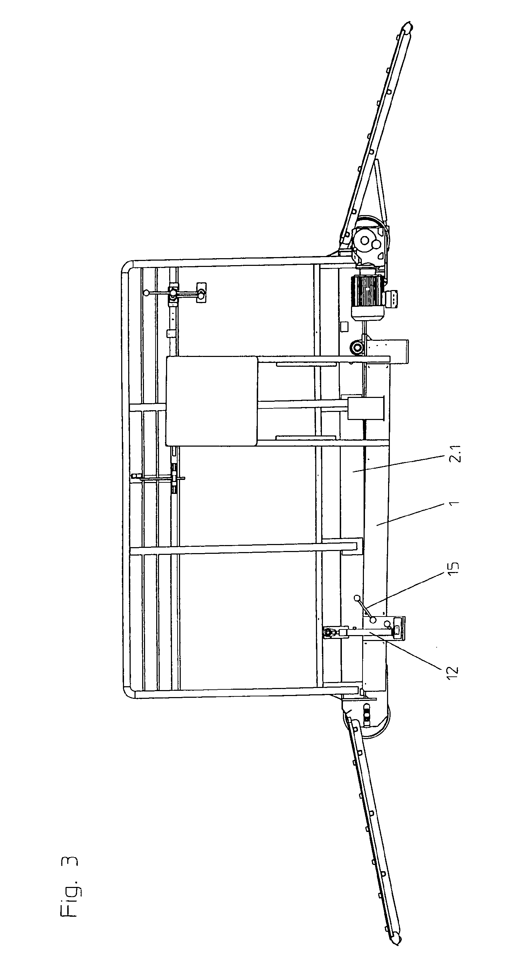

Beabstandet von dieser ersten Achse, nämlich im Bereich des abgehseitigen Endes des Grundgestells 1, befindet sich ein Hydraulikzylinder 12 und, genau gegenüber auf der anderen Seite des Grundgestells 1, ein zweiter, identischer Hydraulikzylinder. Die Hydraulikleitungen sind nicht dargestellt. Die unteren Enden der Hydraulikzylinder stützen sich gegen das Grundgestell 1 ab. Die oberen Enden ihrer jeweiligen Kolbenstangen wie 12.1 sind über ein Kugelgelenk mit dem jeweiligen Längsträger des Rahmens verbunden. Mittels dieser Hydraulikzylinder lässt sich der Rahmen 2 um die Achse A schwenken, das heißt bis zu der in Figur 2 dargestellten Bergaufstellung und der in Figur 3 dargestellten Bergabstellung mit einer Steigung bzw. Neigung verstellen, die über nicht dargestellte Bedienorgane an einem Schaltkasten 13 einstellbar ist, in dem die an sich bekannte Steuerung der übrigen Funktion des Laufbandes untergebracht ist.

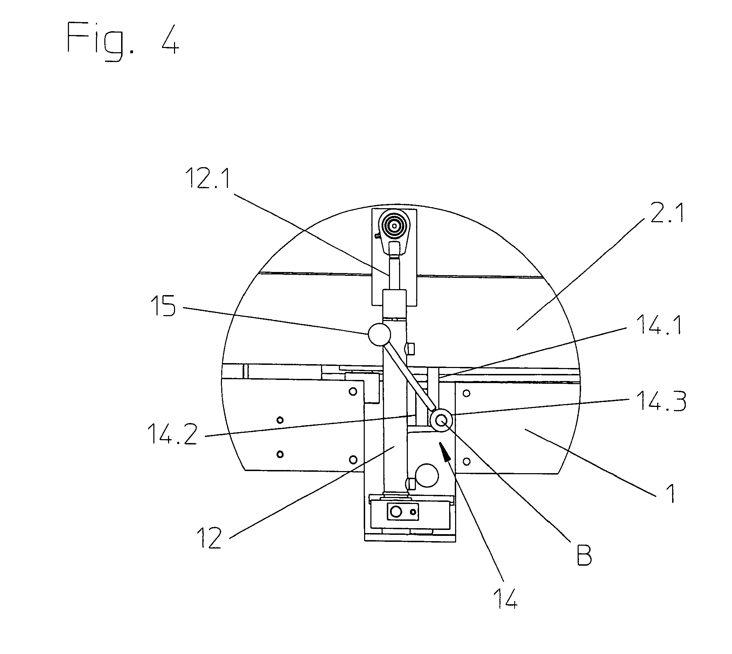

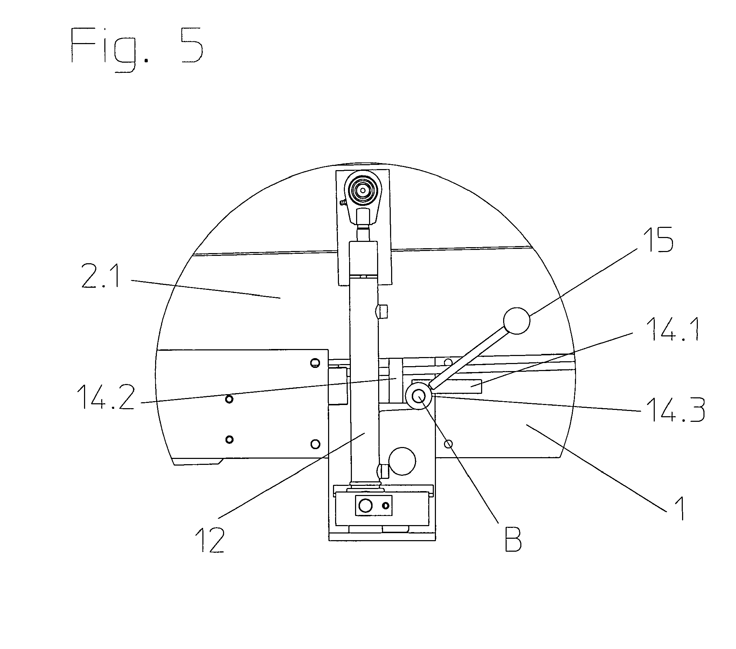

In der horizontalen Stellung gemäß Fig. 1 ruht der Rahmen 2 gemäß Fig. 4 mit der Unterseite seines Längsträgers 2.1 auf der freien Stirnfläche eines Profilstabes 14.1 einer Auflage 14. In der Bergabstellung gemäß Fig. 3 ruht der Rahmen 2 stattdessen gemäß Fig. 5 auf einem Anschlag 14.2, der fest mit denm Grundgestell 1 verbunden ist. Auf der anderen, rechten Seite befinden sich eine gleichartige Auflage und ein gleichartiger Anschlag.

Zur Umstellung von der horizontalen Stellung in die Bergabstellung ist die Auflage 14 wegschwenkbar. Hierzu ist der Profilstab 14.1 mit einer Hülse 14.3 verschweißt. Diese ist mittels eines Handhebels 15 aus der Stellung in Fig. 4 in die Stellung gemäß Fig. 5 drehbar und zwar um eine zweite Achse B, die parallel zu der ersten Achse A, also recht winklig zur Längsrichtung des Gurtbandes 3 ist. Die Hülse 14.3 der Auflage 14 und ebenso die gegenüberliegende Hülse könnte hierzu z.B. auf einem feststehenden, mit dem Grundgestell 1 verbundenen Drehzapfen sitzen.

Im vorliegenden Ausführungsbeispiel sitzt jedoch die Hülse 14.3 und damit die Auflage 14 drehfest auf einer in dem Grundgestell 1 drehbar gelagerten Welle 16, die sich bis auf die gegenüberliegende Seite des Grundgestells 1 erstreckt und dort an ihrem Ende mit der Hülse der gleichartigen Auflage auf der rechten Seite des Laufbandes bzw. dessen Grundgestells 1 drehfest verbunden ist. Über den Handhebel 15 können somit die beidseitigen Auflagen gemeinsam aus der Stellung in Fig. 4 in die Stellung in Fig. 5 gebracht werden. In dieser Stellung kann der Rahmen 2 und damit das Gurtband 3 des Laufbandes mittels der Hydraulikzylinder wie 12 bis auf die Anschläge 14.2, d.h. bis zu der maximalen Bergabstellung in Fig. 3 abgesenkt werden. Die Hydraulikzylinder sind so ausgelegt, dass ihr Hub mindestens gleich der Summe der Verstellwege in Bergabrichtung und in Bergaufrichtung ist.

Aus pferdephysiologischen Gründen ist die maximale Neigung in der Bergabstellung in der Regel auf einen kleineren Wert als die maximale Steigung in der Bergaufstellung begrenzt. Der einstellbare Bereich bewegt sich normalerweise zwischen -3° und +10°. Der maximal einstellbare Neigungswinkel ergibt sich aus der Differenz der Längen des Profilstabes 14.1 und des Anschlages 14.2.

Aus Sicherheitsgründen ist der Schwenkwinkel der Auflagen wie 14 konstruktiv auf 90° beschränkt und eine Zwangsführung oder Verrastung in den jeweiligen Endstellungen gemäß den Figuren 4 bzw. 5 vorgesehen, z.B. mittels einer Feder, die die Auflagen wie 14, gegen ein Anschlagstück zieht oder drückt (nicht dargestellt).

Statt mittels des Handhebels 15 können die Auflagen auch motorisch, z.B. mittels eines kleinen Hydraulikzylinders oder Elektromotors mit Schneckengetriebe (nicht dargestellt) zwischen ihren beiden Endstellungen verschwenkbar sein. Diese Änderung der Konstruktion liegt im Bereich fachmännischen Könnens

In einer anderen, nicht dargestellten Ausführungsform sind die Auflagen für den Rahmen 2 als kleine Hydraulikzylinder ausgeführt, die in der Orientierung des Profilstabes 14.1 angeordnet sind, sich mit ihrem unteren Ende gegen das Grundgestell abstützen und mit ihrem oberen Ende, also z.B. dem Ende der jeweiligen Kolbenstange, mit dem gleichseitigen Längsträger wie 2a verbunden sind. Der Hub ist so bemessen, dass die Neigung des Rahmens 2 von der horizontalen Stellung in Fig. 1 bis in die Bergabstellung in Fig. 3 verstellbar ist. In dieser Ausführungsform kann für die horizontale Stellung des Rahmens bzw. des Laufbandes eine zusätzliche mechanische Sicherung vorgesehen sein, die verhindert, dass das Gurtband in die maximale Bergabstellung absinkt, falls diese Hydraulikzylinder unbeabsichtigt drucklos werden.

Unabhängig davon kann die Stellung des Rahmens und damit des Laufbandes mittels mindestens eines Sensors erfasst und nach entsprechender elektrischer Umsetzung in einem Bedienfeld an dem Schaltkasten 13 angezeigt werden.

## Patentansprüche

1. Laufband für Pferde, bestehend aus einem Grundgestell (1), in welchem ein Rahmen (2) gelagert ist, der zwei parallele, voneinander um mehr als die Breite des Pferdes beabstandete Längsträger (2.1) umfasst, zwischen denen ein endloses Gurtband (3) über zwei voneinander beabstandete Umlenkrollen (4, 5) läuft, von denen eine motorisch antreibbar ist, wobei der Rahmen (2) mittels Hydraulikzylindern (12) um eine zur Längsrichtung des Gurtbandes (3) rechtwinklige, im Bereich einer der Umlenkrollen (4, 5) verlaufende erste Achse (A) zwischen einer horizontalen Stellung und einer Bergaufstellung verstellbar ist, **dadurch gekennzeichnet, dass** der Rahmen (2) in der horizontalen Stellung auf beidseitigen, von der ersten Achse (A) beabstandeten Auflagen (14) ruht, die zur Verstellung des Rahmens (2) in die Bergabstellung schwenkbar sind.

2. Laufband nach Anspruch 1, **dadurch gekennzeichnet, dass** die Auflagen (14) um eine zu der ersten Achse (A) parallele zweite Achse (B) schwenkbar sind.

3. Laufband nach Anspruch 1 oder 2, **dadurch gekennzeichnet, dass** der Schwenkwinkel der Auflagen (14) auf 90° begrenzt ist.

4. Laufband nach Anspruch 2 oder 3, **dadurch gekennzeichnet, dass** die zweite Achse (B) durch eine drehfest die Auflagen (14) tragende Welle (16) verkörpert ist, die an mindestens einem ihrer Enden einen Handhebel (15) zum Schwenken der Auflagen (14) hat.

5. Laufband nach Anspruch 4 oder 5, **dadurch gekennzeichnet, dass** die Auflagen (14) motorisch schwenkbar sind.

6. Laufband nach einem der Ansprüche 1 bis 5, **dadurch gekennzeichnet, dass** der Rahmen (2) in der maximalen Bergabstellung auf Anschlägen (14.2) aufliegt, die fest mit dem Grundgestell (1) verbunden sind.

7. Laufband nach einem der Ansprüche 1 bis 6, **dadurch gekennzeichnet, dass** die Neigung des Rahmens (2) in der Bergabstellung kontinuierlich einstellbar ist.

8. Laufband nach einem der Ansprüche 1 bis 7, **dadurch gekennzeichnet, dass** der Hub der Hydraulikzylinder (12) mindestens gleich der Summe der maximalen Verstellwege in Bergabrichtung und in Bergaufrichtung ist.

9. Laufband nach einem der Ansprüche 1 bis 8, **dadurch gekennzeichnet, dass** den Auflagen (14) mindestens ein Stellungssensor zugeordnet ist, der mit einer Anzeige in einem Schaltkasten (13) verbunden ist.
